# EUROPEAN PATENT SPECIFICATION

(11) **EP 4 486 498 B1**
(45) Date of publication and mention of the grant of the patent: **17.12.2025**
(21) Application number: 23705581.9
(22) Date of filing: 21.02.2023
(51) Int. Cl.: B01J 19/12, B01J 19/24

(54) **INTEGRATED PHOTOCHEMICAL FLOW REACTOR**
INTEGRIERTER PHOTOCHEMISCHER STRÖMUNGSREAKTOR
RÉACTEUR À FLUX PHOTOCHIMIQUE INTÉGRÉ

(30) Priority: 01.03.2022 EP 22159355
(43) Date of publication of application: 08.01.2025
(73) Proprietor: Signify Holding B.V., 5656 AE Eindhoven (NL)
(72) Inventor: BENOY, Daniël, Anton, 5656 AE Eindhoven (NL); BROERSMA, Remy, Cyrille, 5656 AE Eindhoven (NL); SWEEGERS, Norbertus, Antonius, Maria, 5656 AE Eindhoven (NL)
(74) Representative: Verweij, Petronella Daniëlle
(86) International application number: PCT/EP2023/054321
(87) International publication number: WO 2023/165849

(56) References cited:
- EP-A1- 3 881 930
- WO-A1-2015/148279
- JP-A- 2012 089 755
- JP-A- S57 136 933
- US-A- 3 554 887
- US-A1- 2014 050 630

## Description

### FIELD OF THE INVENTION

The invention relates to a photoreactor assembly comprising a reactor and a light source arrangement. The invention further relates to a method for treating a fluid with light source radiation.

### BACKGROUND OF THE INVENTION

Reactors with lighting are known in the art. For instance, US2020/0239820 describes a reactor including a vat intended for containing a mass to be treated and at least one lighting and heating device intended for promoting the treatment of said mass, characterized in that the lighting and heating device comprises: a plate including at least one groove extending longitudinally and made up of a bottom and two side walls; and lighting means in thermal contact with the bottom of the groove, so that the heat generated by the lighting means is transmitted to the mass to be treated via the bottom of the plate.

WO2015/148279A1 discloses a modular photochemical reactor system comprising a plurality of fluidic modules each having a central planar process fluid layer, and two outer planar thermal control fluid layers for containing flowing thermal control fluid and a plurality of illumination modules. The illumination modules have a planar form with first and second major surfaces and comprising at least a first array of semiconductor emitters having at least a first emitter and a second emitter emitting at different center wavelengths.

EP3881930A1 discloses a photoreactor comprising a reactor configured for hosting a fluid to be treated with light source radiation and a light source arrangement for generating the light source radiation. The reactor wall is configured in a radiation receiving relationship with the light source arrangement. Fluid transport channels for cooling are configured in functional contact with the reactor.

US3554887A discloses a photochemical reactor comprising a reactor tube that is positioned at a fixed distance from a light source. In use, reactants flow through the reactor tube and are irradiated by the light source. The light source is cooled by a cooling liquid.

### SUMMARY OF THE INVENTION

Photochemical processing or photochemistry relates to the chemical effect of light. More in general photochemistry refers to a (chemical) reaction caused by absorption of light, especially ultraviolet light (radiation), visible light (radiation) and/or infrared radiation (light). Photochemistry may for instance be used to synthesize specific products. For instance, isomerization reactions or radical reactions may be initiated by light. Other naturally occurring processes that are induced by light are e.g. photosynthesis, or the formation of vitamin D with sunlight. Photochemistry may further e.g. be used to degrade/oxidize pollutants in water or e.g. air. Photochemical reactions may be carried out in a photochemical reactor or "photoreactor".

One of the benefits of photochemistry is that reactions can be performed at lower temperatures than conventional thermal chemistry and partly for that reason thermal side reactions that generate unwanted by-products are avoided.

Furthermore, commonly used light sources in photochemistry may include low or medium pressure mercury lamps or fluorescent lamps. In addition to that, some reactions may require a very specific wavelength region, and they may even be hampered by light from the source emitted at other wavelengths. In these cases, part of the spectrum may have to be filtered out, which may lead to a low efficiency and complex reactor design.

In the recent years the output of Light Emitting Diodes (LEDs), both direct LEDs with dominant wavelengths ranging for instance from UVC to IR wavelengths, and phosphor-converted LEDs, has increased drastically, making them interesting candidates for light sources for photochemistry. High fluxes can be obtained from small surfaces, especially if the LEDs can be kept at a low temperature.

In prior art systems, a substantial proportion of the light source radiation may be unused, i.e., it does not interact with reagents/fluid in the reactor, but may instead leave the system, may be lost due to Fresnel reflection and/or may be absorbed by other elements in the system. In particular, the light source radiation may be absorbed, which may result in excessive heat being produced in the photoreactor assembly, which in turn may result in unwanted by-products and/or a reduction in the efficiency of the LEDs, and/or the light source radiation may be reflected at reactor walls and may not enter the reactor at all, or only after (multiple) reflections, which may lead to (some) loss in efficiency.

Hence, it is an aspect of the invention to provide an alternative photoreactor assembly, which preferably further at least partly obviates one or more of above-described drawbacks. The present invention may have as object to overcome or ameliorate at least one of the disadvantages of the prior art, or to provide a useful alternative.

Hence, in a first aspect, the invention provides a photoreactor assembly (also "reactor assembly" or "assembly") comprising a photochemical reactor (or: "reactor") and a light source arrangement according to the claims.

With such system, a single channel may be used to control the temperature of the light sources and/or of the fluid in the reactor. For instance, with a cooling liquid the photochemical reactor may be cooled, due thermal contact between the fluid channel system and the photochemical reactor and/or the light source may be cooled, due to thermal contact between the fluid channel system and the support arrangement. Hence, a compact and/or efficient system may be provided.

The term "thermal contact" may especially refer to an arrangement of elements that may provide a thermal conductivity of at least about 10 W/(m*K), such as at least 20 W/(m*K), such as at least 50 W/(m*K). In embodiments, the term "thermal contact" may especially refer to an arrangement of elements that may provide a thermal conductivity of at least about 150 W/(m*K), such as at least 170 W/(m*K), especially at least 200 W/(m*K). In embodiments, the term "thermal contact" may especially refer to an arrangement of elements that may provide a thermal conductivity of at least about 250 W/(m*K), such as at least 300 W/(m*K), especially at least 400 W/(m*K). However, herein "thermal contact" may also refer to an arrangement of elements that may provide a thermal conductivity of at least about 0.05 W/(m*K), such as at least about 0.1 W/(m*K).

The first region may comprise a polymeric material and the second region may comprise a polymeric material. In embodiments, the first region and the second region essentially consist of the same type of material. Other materials, like glasses, may be used as well. Hence, in embodiments the first region, and optionally also the second region, may comprise a light transmissive material. In specific embodiments, the light transmissive material may be made of quartz, borosilicate glass, soda-lime(-silica), high-silica high temperature glass, aluminosilicate glass, or soda-barium soft glass (or sodium barium glass) (PH160 glass). The glass may, e.g., be marketed as Vycor, Corex, or Pyrex. The light transmissive material, in embodiments (at least partly) made of amorphous silica, for instance known as fused silica, fused quartz, quartz glass, or quartz. In further embodiments, the light transmissive material may at least partly be made of a (transmissive) polymer. Suitable polymers are e.g. poly(methyl methacrylate) (PMMA), silicone/polysiloxane, polydimethylsiloxane (PDMS), perfluoroalkoxy alkanes (PFA), and fluorinated ethylene propylene (FEP). In embodiments, the light transmissive material may further comprise a transmissive ceramic material. Examples of transmissive ceramics are e.g. alumina Al₂O₃, yttria alumina garnet (YAG), and spinel, such as magnesium aluminate spinel (MgAl₂O₄) and aluminum oxynitride spinel (Al₂₃O₂₇N₅). In yet further embodiments, the light transmissive material, may comprise (be made of) transmissive materials such as BaF₂, CaF₂ and MgF₂. In further embodiments, the light transmissive material, may comprise a material selected from the group comprising poly fluor alkoxy (PFA), FEP, ethylene tetra fluoroethylene (ETFE), and PMMA. In particular, these materials may be transparent for UV radiation. Especially, a material may be selected that is essentially (chemically) inert for the fluids that are flown through the channels under operation conditions, especially the reactor fluid. Hence, in specific embodiments both the first region and second region comprise light transmissive material, more especially in embodiments the first and the second region are transmissive for the light source radiation. The term "reactor" may especially relate to a (photo)chemical reactor. The term may essentially relate to an enclosed (reactor) chamber in which a (photochemical) reaction may take place. The (photochemical) reaction may take place due to irradiation of a fluid with the light source radiation.

In embodiments, the light source radiation may comprise UV radiation. The light source radiation may in further embodiments (also) comprise visible radiation. In yet further embodiments, the light source radiation may (also) comprise IR radiation. The term "UV radiation" is known to the person skilled in the art and relates to "ultraviolet radiation", or "ultraviolet emission", or "ultraviolet light", especially having one or more wavelengths in the range of about 10-380 nm. In embodiments, UV radiation may especially have one or more wavelength in the range of about 100-380 nm, such as selected from the range of 190-380 nm. Moreover, the term "UV radiation" and similar terms may also refer to one or more of UVA, UVB, and UVC radiation. UVA radiation may especially refer to having one or more wavelengths in the range of about 315-380 nm. UVB radiation may especially refer to having one or more wavelengths in the range of about 280-315 nm. UVC radiation, may further especially have one or more wavelengths in the range of about 100-280 nm. In embodiments, the light sources may be configured to provide light source radiation having wavelengths larger than about 190 nm. In embodiments, the light source radiation may include wavelengths in the 380-400 nm, which is in the art sometimes indicated as part of the UVA and in other art as part of the visible wavelength range.

The terms "visible", "visible light", "visible emission", or "visible radiation" and similar terms refer to light having one or more wavelengths in the range of about 380-780 nm. The term "IR radiation" especially relates to "infrared radiation", "infrared emission", or "infrared light", especially having one or more wavelengths in the range of 780 nm to 1 mm. Moreover, the term "IR radiation" and similar terms may also refer to one or more of NIR, SWIR, MWIR, LWIR, FIR radiation. NIR may especially relate to Near-infrared radiation having one or more wavelength in the range of about 750-1400 nm. SWIR may especially relate to Short-wavelength infrared having one or more wavelength in the range of about 1400-3000 nm. MWIR may especially relate to Mid-wavelength infrared having one or more wavelength in the range of about 3000-8000 nm. LWIR may especially relate to Long-wavelength infrared having one or more wavelength in the range of about 8-15 µm. FIR may especially relate to Far infrared having one or more wavelength in the range of about 15-1000 µm.

The light source arrangement comprises a support arrangement for the one or more light sources. The term "light source arrangement" herein refers to the arrangement of one or more light sources, especially a plurality of light sources., i.e., a spatial arrangement (such as relative to the photochemical reactor).

The term "region" may refer to part of a device. Hence in embodiments the first region and the second region are parts of the same device, without interfaces. Hence, in specific embodiments, the first region and the second region may be configured in thermal contact with each other or form a monolithic body. For instance, a microfluid device may be casted or created via lithography, comprising two or more channels, of which one is to be used as part of the flow reactor system, and of which another one is to be used as part of the fluid channel system. However, in other embodiments, the first region and the second region may be assembled into a photoreactor assembly (or at least part thereof). In such embodiments, there may be interfaces between the first region and the second regions. Such interfaces may in embodiments also be available between a main body comprising the flow reactor system and the fluid channel system and a cover closing the flow reactor system and the fluid channel system.

In embodiments, the first region and the second region may be configured in optical contact. Optical contact may refer to the transfer of light (or radiation) between two conformal surfaces, such as between the first region and the second region. Hence, in embodiments radiation of the light source(s) may propagate via the second region into the flow reactor system (comprised by the second region). As indicated above, the first region and the second region may comprise light transmissive materials. The light transmissive materials of the first region and the second region may be the same or may be different. When the first region and the second region are part of a monolithic body, they will in general comprise essentially the same light transmissive materials. In specific embodiments, only the second region comprises light transmissive material. In specific embodiments, (only) the second region may be transparent for at least part of the light source radiation. In other embodiments, both first region and the second region may be transparent for at least part of the light source radiation.

In embodiments, the flow reactor system may comprise a reactor channel, through which a fluid (or "reactor fluid") may be flown. In embodiments, the flow reactor system may be configured to react one or more rector fluid(s) within flow reactor cells in the reactor channel or comprised by the reactor channel. In further embodiments, the one or more chemicals flown through the flow reactor cells may (also) be reacted with the light source radiation irradiated on the one or more chemicals. The flow reactor system may be configured for hosting the (reactor) fluid to be treated, especially with light source radiation. In embodiments, the flow reactor system may be configured in a radiation receiving relationship with (at least part of) the plurality of light sources. Hence, a fluid may be transported through the flow reactor system and at least part of the flow reactor system may be irradiated with the radiation.

More especially, the flow reactor system may comprise one or more channels and optionally one or more reaction chamber in fluid contact with the one or more channels. The radiation may be provided to at least part of the one or more channels, or, when one or more reaction chambers are available, alternatively or additionally to the one or more reaction chambers. A reaction chamber may comprise a flow reactor cell.

As indicated above, the fluid channel system may be used to control a temperature of one or more of the fluid in the flow reactor system and the light sources. Hence, a fluid may be transported through the fluid channel system which may be a cooling liquid or a heating liquid, or during one period a cooling liquid and during another period a heating liquid. The fluid channel system may comprise one or more channel(s) (or "thermal channel(s)"), and optionally one or more chambers. The fluid channel system may comprise a plurality of channels, through which the fluid may flow. Optionally, the flow through two or more channels of the fluid channel system may be controlled individually.

In embodiments, the fluid channel system may (thus) be configured to not be in fluid contact with the flow reactor system. The flow reactor system and the fluid channel system may host different fluids, wherein these fluids are not in fluidic contact. Hence, the flow reactor system and the fluid channel system may not be in fluidic contact. In embodiments, the first region and the second region may be in thermal contact, especially in physical contact. Thereby, they are transmissive for thermal energy through conduction. In embodiments, the first region and second region may form a monolithic body. Thermal energy can transfer across the monolithic body; thus the first region and the second region remain in thermal contact. Thermal contact between the first region and second region may refer to transfer of heat from the first region to the second region, and vice versa. In embodiments, the first region may be cooled by the second region, or vice versa. This provides the advantage of controlling the temperature of the first region by controlling the temperature of the second region. Hence, the first region may be indirectly cooled (or heated) by cooling (or) heating the second region. Therefore, in embodiments the fluid channel system may be configured for temperature control of one or more of the photochemical reactor and the light sources.

Suitable thermally conductive materials, that may be used to provide the thermal contact, may be selected from the group (of thermally conductive materials) consist of copper, aluminum, silver, gold, silicon carbide, aluminum nitride, boron nitride, aluminum silicon carbide, beryllium oxide, a silicon carbide composite, aluminum silicon carbide, a copper tungsten alloy, a copper molybdenum carbide, carbon, diamond, and graphite. Alternatively, or additionally, the thermally conductive material may comprise or consist of a ceramic material, such aluminum oxide of a garnet of the YAG-type family, such as YAG. Especially, the thermally conductive material may comprise e.g. copper or aluminum. As indicated above, however, the photoreactor assembly may also comprise a polymeric material and/or a glass material. More especially, the first region and the second region may essentially consist of polymeric materials. Such materials may be transmissive for the radiation. Hence, in embodiments the reactor material may comprise a polymeric material. Alternatively, one or more of the first region and the second region may essentially consist of glass. Hence, in embodiments the photochemical reactor may comprise a light transmissive material that is transmissive for the light source radiation.

Especially, the light transmissive material may allow at least part of the light source radiation to pass through the light transmissive material unhampered.

The term "transmissive" in the phrase "transmissive to the light source radiation" especially refers to the property of allowing the light source radiation to pass through (the transmissive material). In embodiments, the light transmissive material may be translucent for the light source radiation. Yet, in further embodiments, the light transmissive material may be transparent for the light source radiation. The term "transmissive" not necessarily implies that the light transmissive material is transmissive for 100% of the light source radiation provided. In embodiments the light transmissive material may be transmissive to at least 50% of the light source radiation emitted, such as at least 70%, especially at least 90%. In further embodiments, the light transmissive material may be transmissive to at least 95% of the light source radiation, such as at least 98%.

The transmission (or light permeability) can be determined by providing light at a specific wavelength with a first intensity to the light transmissive material under perpendicular radiation and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

In specific embodiments, a material may be considered transmissive when the transmission of the radiation at a wavelength or in a wavelength range, especially at a wavelength or in a wavelength range of radiation generated by a source of radiation as herein described, through a 1 mm thick layer of the material, especially even through a 5 mm thick layer of the material, under perpendicular irradiation with said radiation is at least about 20%, such as at least 40%, like at least 60%, such as especially at least 80%, such as at least about 85%, such as even at least about 90%.

The light transmissive material has light guiding or wave guiding properties. Hence, the light transmissive material is herein also indicated as waveguide material or light guide material. The light transmissive material will in general have (some) transmission of one or more of (N)UV, visible and (N)IR radiation, such as in embodiments at least visible light, in a direction perpendicular to the length of the light transmissive material. Without the activator (dopant) such as trivalent cerium, the internal transmission in the visible might be close to 100%.

The transmission of the light transmissive material (as such) for one or more luminescence wavelengths may be at least 80%/cm, such as at least 90%/cm, even more especially at least 95%/cm, such as at least 98%/cm, such as at least 99%/cm. This implies that e.g. a 1 cm3 cubic shaped piece of light transmissive material, under perpendicular irradiation of radiation having a selected luminescence wavelength (such as a wavelength corresponding to an emission maximum of the luminescence of the luminescent material of the light transmissive material), will have a transmission of at least 95%.

Herein, values for transmission especially refer to transmission without taking into account Fresnel losses at interfaces (with e.g. air). Hence, the term "transmission" especially refers to the internal transmission. The internal transmission may e.g. be determined by measuring the transmission of two or more bodies having a different width over which the transmission is measured. Then, based on such measurements the contribution of Fresnel reflection losses and (consequently) the internal transmission can be determined. Hence, especially, the values for transmission indicated herein, disregard Fresnel losses.

In embodiments, an anti-reflection coating may be applied to the luminescent body, such as to suppress Fresnel reflection losses (during the light incoupling process).

In addition to a high transmission for the wavelength(s) of interest, also the scattering for the wavelength(s) may especially be low. Hence, the mean free path for the wavelength of interest only taking into account scattering effects (thus not taking into account possible absorption (which should be low anyhow in view of the high transmission), may be at least 0.5 times the length of the body, such as at least the length of the body, like at least twice the length of the body. For instance, in embodiments the mean free path only taking into account scattering effects may be at least 5 mm, such as at least 10 mm. The wavelength of interest may especially be the wavelength at maximum emission of the luminescence of the luminescent material. The term "mean free path" is especially the average distance a ray will travel before experiencing a scattering event that will change its propagation direction.

In embodiments, the element comprising the light transmissive material may essentially consist of the light transmissive material. In specific embodiments, the element comprising the light transmissive material may be a light transparent element.

Especially, the light transmissive element, such as the light transparent element, may in embodiments have an absorption length and/or a scatter length of at least the length (or thickness) of the light transmissive element, such as at least twice the length of the light transmissive element. The absorption length may be defined as the length over which the intensity of the light along a propagation direction due to absorption drops with 1/e. Likewise, the scatter length may be defined as the length along a propagation direction along which light is lost due to scattering and drops thereby with a factor 1/e. Here, the length may thus especially refer to the distance between a primary face and a secondary face of the light transmissive element, with the light transmissive material configured between the primary face and the secondary face.

In embodiments, the light transmissive material may be transmissive for UV radiation. Alternatively or additionally, in further embodiments the light transmissive material may for instance (also) be transmissive for visible radiation. Yet alternatively or additionally, in yet further embodiments, the light transmissive material may be (also) transmissive for IR radiation.

In further embodiments, the support arrangement may be configured in thermal contact with the second region. The support arrangement may hence transfer thermal energy to the second region by thermal contact (for e.g. by conduction). Hence, in embodiments, the second region may be heated (or cooled) by heating or cooling the support arrangement. The light sources may heat the support arrangement. The support arrangement, or a support element comprised by the support arrangement, may transfer heat or thermal energy to the second region of the photochemical reactor. This may provide the advantage of utilizing the light source radiation from the light source(s) more efficiently, especially by conducting the heat to the second region. Further, the support arrangement may (also) be cooled by the second region, thus providing cooling to the light source(s). This may provide the advantage of preventing overheating of the light sources. In embodiments, the first region, the second region and the support arrangement may be in thermal contact. Hence, this may provide the advantage of heating (or cooling) the photoreactor assembly by heating (or cooling) one or more of the first region, the second region or the support arrangement. Further, a single temperature control system may be applied, instead of two temperature control systems; i.e. one for the photochemical reactor and one for the light sources. Though, in embodiments, the light sources may also be in thermal contact with a heatsink, at least part of the thermal energy of the light sources may in embodiments be dissipated via the second region, more especially via the fluid flowing through the fluid channel system.

In yet further embodiments, one or more of the second region and the support arrangement may provide a plurality of light source cavities for hosting one or more of the light sources of the plurality of light sources. This may allow a closer configuration of the light sources to the flow reactor system. In this way, less radiation may be lost by absorption of the reactor material, increasing the efficiency of the system. Further, a higher light intensity may be provided.

In embodiments, one or more of the light source cavities may (each) host at least part of a single light source. Hence, each light source cavity may be arranged (at least partly) enclosing a (respective) light source. In particular, a single light source (of the plurality of light sources) may be arranged in each light source cavity. The phrase "hosting a light source", and similar phrases, may especially indicate that a light emitting surfaces is hosted. Instead of the term "cavity", also the term "notch" may be applied.

As indicated above, the light source arrangement may comprise a plurality of light sources. In further embodiments, the light sources may be connected to one another, such as via a support element supporting the light sources. Hence, in further embodiments, the support arrangement may comprise a support element, such as a plate-like support element, wherein the plurality of light sources are arranged on the support element. The support arrangement may in embodiments comprise a PCB. The one or more light sources, especially the plurality of light sources, may be functionally coupled to the PCB. A PCB may be an embodiment of a support element.

As known in the art, a printed circuit board ("PCB" or "board") may mechanically support and electrically connect electronic components or electrical components using conductive tracks, pads and other features etched from one or more sheet layers of copper laminated onto and/or between sheet layers of a non-conductive substrate (shortly indicated as "track" or "conductive track"). Hence, in embodiments a PCB may comprise an insulating layer arranged between a substrate and a conductive layer.

An (electronic) component, such as a solid stage light source, may generally be soldered onto the PCB to both electrically connect and mechanically fasten it to the PCB. For instance, a basic PCB may consist of a flat sheet of insulating material and a layer of copper foil, laminated to the substrate. Chemical etching divides the copper into separate conducting lines called tracks or circuit traces, pads for connections, vias to pass connections between layers of copper, and features such as solid conductive areas for EM shielding or other purposes. The tracks function as wires fixed in place, and are insulated from each other by air and the board substrate material. The surface of a PCB may have a coating that protects the copper from corrosion and reduces the chances of solder shorts between traces or undesired electrical contact with stray bare wires. For its function in helping to prevent solder shorts, the coating is called solder resist.

In further embodiments, the functional component may comprise an electronic component, especially an electronic component selected from the group comprising a solid state light source, a driver, an electronic module, or a sensor. Especially, the electronic component may comprise a solid state light source.

In embodiments, the board may comprise a rigid board or a semi-rigid board, especially a rigid board. In other embodiments, the board may comprise a semi-rigid board. In specific embodiments, the printed circuit may be flexible. In yet other embodiments, the printed circuit board may be rigid. In embodiments, the board may comprise a metal, especially a metal selected from the group comprising copper aluminum, tin, iron, silver and lead, more especially a metal selected from the group comprising copper and aluminum. In further embodiments, the (printed circuit) board may have a thermal conductivity of at least 200 W/(m*K), especially at least 250 W/(m*K), such as at least 300 W/(m*K). In specific embodiments, the board may comprise a printed circuit board. Especially, the board may comprise one or more of a CEM-1 PCE, a CEM-3 PCE, a FR-1 PCE, a FR-2 PCB, a FR-3 PCB, a FR-4 PCB, and aluminum metal core PCB, especially one or more of a CEM-1 PCB, a CEM-3 PCB, a FR-1 PCB, and a FR4 PCB and an aluminum metal core PCB, more especially one or more of a CEM-1 PCB, a CEM-3 PCB, a FR-1 PCB.

The light source arrangement may, in embodiments, comprise a plurality of light sources arranged on the support element. The support arrangement may, during use, especially be removably attached, thereby, the light source arrangement may be conveniently detached in order to access one or more of the plurality of light sources. Further, such configuration may allow easy assembling of the photoreactor assembly and may further allow for a quick change of one or more of the light sources (e.g. when another radiation wavelength is desired). Yet, in embodiments, the light source arrangement may, during using, be associated to the second region, and may in physical contact therewith. For instance, screws, or other means, may be used to provide an intimate contact between the light source arrangement and the second region. In this way, thermal energy dissipation may be improved.

The plurality of light sources is configured to irradiate at least part of the flow reactor system via the light transmissive material. The flow reactor system is configured to facilitate a reaction, wherein light source radiation incident on the reactor fluid in the flow reaction system executes a reaction. Thus, thermal energy may be provided to execute or facilitate the reaction in the flow reactor system. The light transmissive material provides the advantage of transmitting the light source radiation from the light sources to the reactor fluid in the flow reactor system. Further, the extent of the light source radiation transmitted to the reactor fluid in the flow reactor system may be controlled by the choice of the light transmissive material. Hence, in embodiments, the reaction may be controlled by the choice of the light transmissive material.

The light sources are in thermal contact with the second region via the support arrangement. The photochemical reactor and the support arrangement are (thus) in thermal contact. Hence, the light source(s) is in thermal contact with (the first region and) the second region via the support arrangement. The thermal contact between the first region, the second region, the support arrangement and the light source may provide the benefit of transferring thermal energy (by means of irradiation) or heating the photoreactor assembly using the light sources.

In embodiments, the photoreactor assembly may further comprise a temperature control system. In further embodiments, the temperature control system may be configured to flow a fluid ("temperature control fluid") through the fluid channel system. The temperature control system may flow the fluid at a substantially constant temperature through the fluid channel system. However, in specific embodiments the temperature control system may also be configured to control the temperature of the fluid. Hence, in embodiments the temperature control system may comprise one or more of heaters and coolers. For instance, the temperature control system may comprise one or more Peltier elements. However, other devices to heat or cool the fluid, especially cool, may also be possible.

In embodiments, the fluid channel system may comprise a channel (also "thermal channel" or "thermal flow channel") configured in the photoreactor assembly which may host the fluid, especially through which the fluid may flow (such as by a forced transport or spontaneously). The fluid, may especially be a cooling fluid, may be a gas, such as air. The fluid may also be a liquid, such as water, or an oil. The fluid may further be known as "a coolant". The coolant may in embodiments, be especially different from the reactor fluid. In embodiments, the coolant may also be the same as the reactor fluid. In embodiments, the coolant in the fluid channel system may not be in fluidic contact with the reactor fluid. In embodiments, the channel may be in thermal contact with the fluid channel system, and hence, be in contact with the second region of the photochemical reactor. Hence, in embodiments, the coolant may remove heat from the second region by thermal conduction via the walls of the channel. In further embodiments, the coolant may be configured to flow through the channel. This may provide the advantage of cooling the fluid channel system, especially the second region by transporting heat from the second region. Hence, in embodiments, the coolant may (also) cool the first region. Hence, in embodiments, the fluid channel system may cool the photochemical reactor, especially the photochemical reactor assembly by flowing the coolant through the fluid channel system. In alternative embodiments, the fluid may be a thermal fluid. The fluid may further be known also as "a thermal liquid". In embodiments, the thermal fluid may be flown through the thermal channel to heat the flow reactor system. The flow reactor system and the fluid channel system may be in thermal contact, and hence, in embodiments, the thermal fluid may be configured to heat or cool the flow reactor system, such as especially the reactor channel, such as specifically the flow reactor cells in the reactor channel. In embodiments, the thermal liquid may be used to heat the flow reactor cells when the chemical reactions require a minimum temperature, or the thermal liquid may remove an excess of heat released in the chemical reaction.

In embodiments, the temperature control system may be configured to control a temperature of the fluid in the fluid channel system. In further embodiments, the temperature control system may be configured to control a flow velocity of the fluid in the fluid channel system. In yet further embodiments, the temperature control system may be configured to control one or more of (i) the temperature of the fluid in the fluid channel system, and (ii) the flow velocity of the fluid in the fluid channel system.

The heat transferred from the fluid channel system to the fluid or coolant may depend on the flow rate of the coolant. In embodiments, the temperature control system may be configured to control the flow rate of the coolant by controlling the flow velocity of the coolant. A higher flow rate may remove heat more quickly from the second region, hence, in embodiments the extent of cooling provided may be controlled by controlling the flow rate of the coolant. This may provide the advantage of providing sufficient irradiation to the photochemical reactor to execute the reaction, while at the same time prevent over heating of the photoreactor assembly.

The heat transfer rate between two entities may be directly proportional to the difference in their temperatures. Hence, in embodiments, cooling may (also) be provided by using a low temperature coolant, such as especially a temperature lower than the first region temperature or the second region temperature. Hence, in embodiments, the temperature control system may cool the first region, or the second region, or the photoreactor assembly by controlling either the flow velocity and/or the temperature of the coolant in the fluid channel system.

In embodiments, the temperature control system may (also) heat the first region, the second region, or the photoreactor assembly by reducing the flow velocity or using a higher temperature coolant, or by using a heating fluid. Hence, in embodiments, the temperature control system may control the temperature of the photoreactor assembly by controlling the velocity and/or the temperature of the coolant or fluid in the flow channel system. The support arrangement is in thermal contact with the second region, and hence, in embodiments the temperature control system may (also) cool (or heat) the support arrangement, and hence the light source(s).

In embodiments, the thermal channel in the flow reactor system may be simultaneously used for the thermal management of both the reactor channels in the flow reactor system as well as the light source(s). In embodiments, the cross-sectional dimension of thermal channel may be 10 mm, such as especially 11.5 mm, such as specifically 13 mm. In further embodiments, a maximum of 4 light sources with a size of 3mm x 3mm, such as especially 4 mm x 4 mm, such as specifically 5 mm x 5 mm may be accommodated.

The temperature control system may perform the function of "temperature controlling" or "temperature control". The term "temperature controlling" or "temperature control" may also be referred to as "thermal management". The term "temperature controlling" or "temperature control" may in embodiments of the invention especially be explained based on reducing the temperature, and as such temperature controlling may herein mostly be described as cooling. Yet, in alternative embodiments temperature controlling may comprise increasing a temperature. Hence, it will be understood that if the element is explained in relation to cooling, the temperature control system may in alternative embodiments be used for heating. As such in embodiments the term "cooling" may be exchanged with the term "heating" (or "temperature control(ling)").

In specific embodiments, one or more of (i) the temperature of the fluid, and (ii) the flow velocity of the fluid may be controlled by the temperature control system in dependence of one or more of (a) a temperature of the flow reactor system, (b) a junction temperature of the at least one of the light sources, and (c) electrical power provided to at least one of the light sources.

In embodiments, specifically the temperature control system may be configured to control the temperature of the fluid in the fluid channel system such that it is lower than the junction temperature of the at least one of the light sources. Alternatively or additionally, the temperature control system may in embodiments be configured to control the temperature of the fluid in the fluid channel system such that it is lower than the flow reactor system, or more especially the reactor fluid therein. Alternatively or additionally, in embodiments, the temperature control system may be configured to control a temperature of the flow reactor system, or more especially the reactor fluid therein, below the junction temperature of the at least one of the light sources. Hence, in specific embodiments, the temperature control system may be configured to control the temperature of the fluid to be lower than the temperature of the flow reactor system or the temperature of the reactor fluid and/or controlling the temperature of the flow reactor system or the temperature of the reactor fluid to be lower than the junction temperature.

In other embodiments, the temperature control system may be configured to control a temperature of the support arrangement below the junction temperature of the at least one of the light sources. In further embodiments, the temperature control system may be configured to control the temperature of the flow reactor system, and of the support arrangement below the junction temperature of the at least one of the light sources.

In embodiments, temperature control may be provided in dependence of the temperature of the flow reactor system. Photochemical reactions may be executed in the flow reactor system, which may require to be operated within a range of temperatures. Hence, in specific embodiments, the temperature control system may provide temperature control such as especially controlling the temperature of the fluid flow reactor (and thereby controlling the temperature of the reactor fluid in the flow reactor system).

In general, a cooler environment may yield a higher output from an LED light source. Higher temperatures may generally reduce light output, for e.g. in warmer environments and at higher currents, the temperature of the semiconducting element may increase. Light source(s) may overheat (for e.g. due to continuous operation for long periods of time), and hence, in embodiments the temperature control system may be configured to cool the light source(s). Hence, in embodiments, the temperature control system may be configured to provide temperature controlling in dependence of a junction temperature. Here, "junction" relates to specialized PN junction of the semiconductor material, which the LED is comprised of.

The electrical power provided to the one or more light sources may be a proxy for the temperature of the light sources. Hence, in embodiments, the temperature control system may provide temperature controlling in dependence of the electrical power provided to one or more light source(s).

Hence, the fluid channel system may especially be configured in functional contact (especially in thermal contact) with the flow reactor system. The fluid may be configured for cooling the fluid channel system. The flow reactor system (in thermal contact) with the fluid channel system may hence especially be cooled by the flow reactor system.

Note that in embodiments the temperature of the reactor fluid may also be controlled by the flux of the light source radiation provided to the reactor fluid.

In embodiments, the second region may comprise second region cavities. In further embodiments, the light sources may at least partly extend into the second region cavities. The term "second region cavities" may refer to cavities in the second region.

The surface area of the second region cavities may increase when the second region cavities extend (deeper) into the second region. This may provide the advantage of directing more of the light source radiation to the second region, thus increasing the extent of irradiation received by the second region.

Hence, in embodiments the light source cavities may comprise the second region cavities.

In embodiments, the second region cavities may be configured in a 2D array. In further embodiments, the second region cavities may be arranged in the support arrangement according to a regular pattern. Especially, the regular pattern may be defined according to a tessellating grid of (regular) polygons, especially a tessellating grid of squares, or especially a tessellating grid of (regular) hexagons, especially wherein a second region cavity is arranged in each grid cell, such as in the center of each grid cell. In embodiments, the second region cavities may be arranged according to the regular pattern, according to one or more regular patterns, especially according to two or more (different) regular patterns, or especially according to a single regular pattern.

In embodiments, a flow path along the fluid channel system may be arranged along (or "encounter") at least 5 second region cavities, such as at least 10 second region cavities, especially at least 20 second region cavities. In further embodiments, the flow path may be arranged along at least 50 second region cavities, such as at least 100 second region cavities.

In particular, in embodiments, each second region cavity arranged along the flow path may comprise a (single) light source configured to irradiate (fluid flowing along) the flow path. Hence, the second region may have second region cavities in which light sources may be arranged. Further, the second region cavities may have a dome-like shape arranged such that loss of light source radiation due to Fresnel reflection may be reduced. In particular, the second region cavities and light sources may be arranged (relative to one another) to provide small incident angles (relative to a normal to the surface) of the light source radiation on the second region cavities. Hence, the photoreactor assembly of the invention may increase the efficiency of light usage, while reducing undesired heat generation. In particular, the light sources may be arranged in the second region cavities such that essentially all the light (in ±90°) has an incident angle on the second region cavities close to 0° (so the Fresnel reflections are kept to a minimum). Especially, the photoreactor assembly of the invention may be relatively highly efficient in terms of light source radiation usage versus power input of the light sources.

In further embodiments, the at least one of the second region cavities may comprise dome segments having an (independently selected) dome-like shape, especially a dome-like shape selected from the group comprising a geodesic dome-shape, an ellipsoidal dome-shape, an oval dome-shape, and a hemispherical dome-shape. In such embodiments, the dome segments may be configured in a radiation receiving relationship with (at least part of) the plurality of light sources. In particular, the light sources may be arranged in the second region cavities, especially wherein the light sources are configured to provide light source radiation to dome segments.

In embodiments, each light source may be configured to provide at least 60% of the emitted light source radiation to the (respective) dome segment, such as at least 70%, especially at least 80%. In further embodiments, each light source may be configured to provide at least 90% of the emitted light source radiation to the (respective) dome segment, such as at least 95%, especially at least 99%, including 100%.

In further embodiments, each light source may be configured to provide at least 60% of the emitted light source radiation to the fluid via the (respective) dome segment, such as at least 70%, especially at least 80%. In further embodiments, each light source may be configured to provide at least 90% of the emitted light source radiation to the fluid via the (respective) dome segment, such as at least 95%, especially at least 99%, including 100%.

In embodiments, the second region cavities may extend into the fluid channel system. In further embodiments, the second region cavities may not be in fluid contact with the fluid channel system; i.e. the fluid in the fluid channel system may not enter the second region cavities.

The extent of irradiation provided may be improved in embodiments, by extending the second region cavities such that they may be within the fluid channel system. However, in embodiments, the configuration of the second region cavities (for e.g. a staggered arrangement) may prevent fluidic contact with the fluid channel. This may provide the advantage of positioning the light source(s) in close proximity to the coolant, while still protecting or isolating the light source(s) from the coolant.

Light source cavities may be provided due to notches in the second region. Alternatively or additionally, the support arrangement (together with the second region) may provide (for) light source cavities.

In embodiments, the support arrangement may comprise protrusion elements. In further embodiments, the second region may comprise protrusion elements. In yet further embodiments, the support arrangement and/or the second region may comprise protrusion elements. In specific embodiments, the protrusion elements may extend from the support arrangement or from second region, respectively.

In specific embodiments, the protrusion elements may define protrusion element-based cavities. In further embodiments, the light sources may at least partly extend into the protrusion element-based cavities. Hence, in embodiments, the light source cavities may comprise the protrusion element-based cavities. The term "protrusion element-based cavities" may especially indicated that the cavities may essentially be defined by the protrusions. One or more protrusions may define a cavity, which may host a light source.

In embodiments, one or more of the protrusion element-based cavities may (each) host a single light source. Hence, each protrusion element-based cavity may be arranged (at least partly) enclosing a (respective) light source. In particular, a single light source (of the plurality of light sources) may be arranged in each protrusion element-based cavity.

In embodiments, the protrusion element-based cavities may be configured in a 2D array. In further embodiments, the protrusion element-based cavities may be arranged according to a regular pattern. Especially, the regular pattern may be defined according to a tessellating grid of (regular) polygons, especially a tessellating grid of squares, or especially a tessellating grid of (regular) hexagons, especially wherein a protrusion element-based cavity is arranged in each grid cell, such as in the center of each grid cell.

In embodiments, the protrusion element-based cavities may be arranged according to the regular pattern. In further embodiments, protrusion element-based cavities may be arranged according to one or more regular patterns, especially according to two or more (different) regular patterns, or especially according to a single regular pattern.

In embodiments, the protrusion elements may provide at least part of the thermal contact between the support arrangement and the second region.

The protrusion elements may extend from the second region and may be in thermal contact with the support arrangement and/or the protrusion elements may extend from the support arrangement and may be in thermal contact with the second region.

In further embodiments, the protrusion elements may comprise a light transmissive material. Examples of light transmissive materials are also provided above. Especially in embodiments, the light transmissive material may comprise a borosilicate glass-AlN composite, such as described by Mingsheng Ma et al. in "Enhanced thermal conductivity of low-temperature sintered borosilicate glass-AlN composites with -Si3N4 whiskers", Journal of the European Ceramic Society 33 (2013) 833 - 839), which is herein incorporated by reference. Alternatively or additionally, in embodiments the protrusion element may (also) comprise a reflective material (reflective for the light source radiation).

In embodiments, the protrusion elements may form an intermediate layer. In embodiments, the protrusion elements may be in thermal contact with the second region and the support arrangement. Further, in embodiments, the protrusion element may (also) comprise other materials that may be optically transmissive and thermally conductive.

In embodiments, the photoreactor assembly may further comprise an intermediate layer configured between at least part of the second region and at least part of the support arrangement. In embodiments, the intermediate layer may be in thermal contact between the second region and at least part of the support arrangement.

In further embodiments, the intermediate layer may comprise a phase change material. A phase change material (PCM) is a substance which releases/absorbs sufficient energy at phase transition to provide useful heat/cooling. Generally the transition may be from one of the first two fundamental states of matter - solid and liquid - to the other. The phase transition may also be between non-classical states of matter, such as the conformity of crystals, where the material goes from conforming to one crystalline structure to conforming to another, which may be a higher or lower energy state.

By melting and solidifying at the phase change temperature, a PCM is capable of storing and releasing large amounts of energy compared to sensible heat storage. Heat is absorbed or released when the material changes from solid to liquid and vice versa or when the internal structure of the material changes. The energy released/absorbed by phase transition from solid to liquid, or vice versa, the heat of fusion is generally much higher than the sensible heat.

In embodiments, in the melting state of the PCM used as intermediate layer, the PCM will fill voids in the contact layer between second region and support element.

In embodiments, heat may be absorbed by the PCM resulting in a change in state, such as from a solid to liquid without an increase in temperature. Alternatively, in embodiments, heat may be released by the PCM resulting in a change in state from liquid to solid, without an increase in temperature. In specific embodiments, the intermediate layer may be physically coupled with the second region and the support arrangement, such as specifically the intermediate layer may be configured between the second region and the support arrangement.

In embodiments, the phase change material may be an organic phase change material, such as hydrocarbons, paraffins (CₙH₂ₙ₊₂), lipids and sugar alcohols. In further embodiments, the phase change material may be inorganic, such as inorganic salt hydrates (MₓN_{y}H₂O). In yet further embodiments, the PCM may (also) be Bergquist Hi Flow THF 1400P, wherein Bergquist Hi Flow THF 1400P is a high performance, electrically insulating, thermally conductive adhesive with polyamide reinforcement.

Hence, in embodiments, the intermediate layer may be configured absorb or release heat. This may provide the advantage of being a buffer for excess thermal energy. Further this may provide thermal insulation to at least a part of the photoreactor assembly.

Hence, in embodiments the intermediate layer may comprise protrusion elements, creating cavities for the light sources. In other embodiments, the intermediate layer may be a (relatively thin) layer on the support arrangement, facilitating thermal contact between the support arrangement and the second region. Further, such intermediate layer may provide a good isolation of the cavities, which may add to the safety. In both embodiments of the intermediate layer, the intermediate layer may facilitate thermal contact between the support arrangement and the second region. The intermediate layer may be light transmissive, may be reflective (for the light source radiation), may be opaque for the light source radiation, etc. When the intermediate layer is a thin layer on the support arrangement, the intermediate layer may be reflective or transparent. The latter may especially be the case when the support arrangement is reflective (for the light source radiation). When the intermediate layer comprises protrusions, intermediate layer may be light transmissive, may be reflective (for the light source radiation), may be opaque for the light source radiation, etc. In embodiments of the protrusions, the intermediate layer is reflective or transmissive for the light source radiation (or a combination thereof).

In embodiments, the photoreactor assembly may comprise a stack of a primary light source arrangement, a primary second region, the first region, a secondary second region, and a secondary light source arrangement.

In embodiments, at least part of the photoreactor assembly may be assembled as stacks. In further embodiments, the primary second region and secondary second region may be configured on either side of the first region. This may provide the advantage of providing temperature control from either side of the flow reactor system, hence, providing improved temperature control and preventing uneven heat distribution in the photoreactor assembly.

In yet further embodiments, the primary light source arrangement and the secondary light source arrangement may be provided on opposite sides of the first region. This may provide the advantage of providing light source radiation from multiple directions, thus, increasing the contact area of the irradiated region in the flow reactor system.

In embodiments, the plurality of light sources may comprise one or more of chips-on-board light sources (COB), light emitting diodes (LEDs), laser diodes, and superluminescent diodes.

In embodiments, (at least part of) the plurality of light sources may comprise Light Emitting Diodes (LEDs), especially an array of light emitting diodes. The term "array" may especially refer to a plurality of (different) arrays. In further embodiments (at least part of) the plurality of light sources may comprise Chips-on-Board light sources (COB). The term "COB" especially refers to LED chips in the form of a semiconductor chip that is neither encased nor connected but directly mounted onto a substrate, such as a Printed Circuit Board. The COB and/or LED may in embodiments may comprise a direct LED (with dominant wavelengths ranging for instance from UVC to IR wavelengths) In further embodiments, the COB and/or LED may comprise one or more phosphor-converted LEDs. Using such light sources, high intensity radiations (light) may be provided per light source or per light source (support) element (see below). In embodiments, e.g., the light sources may provide 100-25,000 lumen (visible light) per light source. In embodiments, the light sources may e.g. apply (consume) 0.5-500 (electrical) Watts per light source (input power).

In embodiments, the plurality of light sources may comprise (single) chips-on-board light sources and/or (single) light emitting diodes, and/or (single) laser diodes. In further embodiments, the light sources may comprise an array of light emitting diodes and/or laser diode sources. Hence, in embodiments the plurality of light sources may comprise one or more of chips-on-board light sources, light emitting diodes, and laser diodes. In further embodiments, the plurality of light sources may comprise chips-on-board light sources and/or an array of light emitting diodes.

In embodiments, the plurality of light sources may comprise a superluminescent diode (SLED or SLD), wherein the superluminescent diode may be an edge-emitting semiconductor light source based on superluminescence.

In embodiments, each light source may have an optical axis, wherein the light source emits essentially all of the light source radiation, such as at least 90% of the light source radiation, especially at least 95% of the light source radiation, such as at least 99% of the light source radiation, including 100%, at angles less than 120°, such as less than 100°, especially less than °90, from the optical axis.

In embodiments, each light source may have essentially Lambertian emission characteristics, i.e., the light source emits essentially all of the light source radiation at angles less than 90° with respect to the optical axis.

Especially, the optical axis may be defined as an imaginary line that defines the (weighted average) path along which light propagates through the system starting from the light generating element, here especially the light source. Hence, the optical axis may especially coincide with a weighted average path of the emitted light source radiation. In general, the optical axis may coincide with the normal to a central position of the light emitting surface.

In further embodiments, one or more of a spectral power distribution of the light source radiation and an intensity of the light source radiation may be controllable. In embodiments, the photoreactor assembly may further comprise a control system. In yet further embodiments, the control system may be configured to control the one or more of the spectral power distribution and the intensity of the light source radiation along one or more dimensions of the photochemical reactor. In specific embodiments, the one or more dimensions of the photochemical reactor may be selected from the group of height, length, width, and diameter.

Hence, in embodiments, one or more of a spectral power distribution of the light source radiation and an intensity of the light source radiation may be controllable, especially the spectral power distribution, or especially the intensity. In specific embodiments, two or more of the plurality of light sources may provide light source radiation having different spectral power distributions. For instance, a first light source may be configured to generate UV radiation and a second light source may be configured to generate visible radiation.

In further embodiments, the photoreactor assembly may further comprise a control system. The control system may especially be configured to control the photoreactor assembly. For instance, in embodiments, the control system may be configured to control a flow of fluid through the fluid channel system. In further embodiments, the control system may be configured to control a composition of the fluid. In further embodiments, the control system may be configured to (independently) control the plurality of light sources. In further embodiments, the control system may comprise the temperature control system.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, a tablet, etc.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

During use of the photoreactor assembly, it may be beneficial to temporally and/or spatially vary the spectral power distribution of the light source radiation. For instance, different spectral power distributions may be successively provided to the reactor, especially to the reactor chamber, more especially to the fluid, for successive chemical reactions, or for controlling, for instance, algal growth phenotypes. Similarly, it may be beneficial to temporally and/or spatially vary the intensity of the light source radiation.

Hence, in embodiments, the control system may be configured to temporally vary one or more of the spectral power distribution and the intensity of the light source radiation, especially the spectral power distribution, or especially the intensity.

In further embodiments, the control system may be configured to control the one or more of the spectral power distribution and the intensity of the light source radiation, especially the spectral power distribution, or especially the intensity, along one or more dimensions of the reactor.

It will be clear to the person skilled in the art, that also a combination of temporal and spatial control is possible.

In another aspect, the invention may be a method for treating a fluid with light source radiation, wherein the method may comprise providing the fluid to be treated with the light source radiation in the photochemical reactor of the photoreactor assembly; and irradiating the fluid with the light source radiation.

The method comprises providing the fluid to be treated with the light source radiation in the photochemical reactor of the photoreactor assembly. The method comprises irradiating the fluid with the light source radiation.

In embodiments, the method may comprise flowing the fluid through the fluid channel system. In further embodiments, the method may comprise controlling a temperature of the fluid in the fluid channel system. In further embodiments, the method may comprise controlling a flow velocity of the fluid in the fluid channel system. In yet further embodiments, the method may comprise flowing the fluid through the fluid channel system, and controlling one or more of (i) a temperature of the fluid in the fluid channel system, and (ii) a flow velocity of the fluid in the fluid channel system. In specific embodiments, the temperature of the fluid, and (ii) the flow velocity of the fluid may be controlled in dependence of one or more of (a) a temperature of a flow reactor system, (b) a junction temperature of the at least one of the light sources, and (c) electrical power provided to at least one of the light sources.

In embodiments, according to the method, the fluid may comprise a light transmissive liquid. In further embodiments, this light transmissive liquid according to the method may comprise a silicone oil. Silicone oil may be light transmissive for the radiation. In yet further embodiments, other materials with similar optical and/or thermal properties of silicone may (also) be used. For instance, in embodiments the fluid may comprise a fluorinated hydrocarbon, such as a fluorinated alkane or a fluorinated alkoxy-alkane, that is liquid at room temperature. In embodiments, the fluid may comprise a perfluoropolyether (PFPE) liquid. In embodiments, the fluid may comprise Galden (from Solvay), such as in embodiments Galden HT PFPE (heat transfer fluids). In embodiments, the fluid may comprise a fluorinated hydrocarbon, such as a fluorinated alkane or a fluorinated alkoxy-alkane, that has a boiling point selected from the range of about 50-280°, such as selected from the range of 55-270°C . Hence, when using a light transmissive fluid, the choice for optical pathways for the light source radiation may even be larger.

Many photochemical reactions are known, such as dissociation reactions, isomerization or rearrangement reactions, addition reactions and substitution reactions, and, e.g., redox reactions. In embodiments, the (photochemical) reaction comprises a photocatalytic reaction. Photochemical reactions may especially use the energy of the light source radiation to change a quantum state of a system (an atom or a molecule) (that absorbs the energy) to an excited state. In the excited state, the system may successively further react with itself or other systems (atoms, molecules) and/or may initiate a further reaction. In specific embodiments, a rate of the photochemical reaction may be controlled by an added (photo-)catalysts or photosensitizer. The terms "treating", "treated" and the like, used herein, such as in the phrase "treating a fluid with the light source (light)" may especially thus relate to performing a photochemical reaction on a relevant (especially photosensitive) system (atom or molecule) in the fluid, especially thereby elevating the system (atom, molecule) to a state of higher energy and especially causing the further reaction. In embodiments a photoactive compound may be provided to the fluid prior and/or during the irradiation of the fluid. For instance, a photocatalyst and/or a photosensitizer may be added to start and/or promote/accelerate the photochemical reaction.

Herein, such atom or molecule may further also be named "a (photosensitive) reactant". Hence, the reactor fluid may comprise a (photosensitive) reactant.

When absorbing (light source) radiation (light), energy of a photon may be absorbed. The photon energy may also be indicated as *h*ν, wherein *h* is Planck's constant and v is the photon's frequency. Hence, the amount of energy provided to the atom or molecule may be provided in discrete amounts and is especially a function of the frequency of the light (photon). Furthermore, the excitation of an atom or a molecule to a higher state may also require a specific amount of energy, which preferably is matched with the amount of energy provided by the photon. This may also explain that different photochemical reactions may require light having different wavelength. Therefore, in embodiments, the photoreactor assembly may be configured to control a wavelength of the light source radiation.

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment describing an operation (of the system) may indicate that the method may, in embodiments, comprise that operation.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1A-B schematically depict-embodiments of the photoreactor assembly.
Fig. 2A-C schematically depicts embodiments of the photoreactor assembly, illustrating the light source arrangement configurations.

The schematic drawings are not necessarily on scale.

### DETAILED DESCRIPTION OF THE EMBODIMENTS

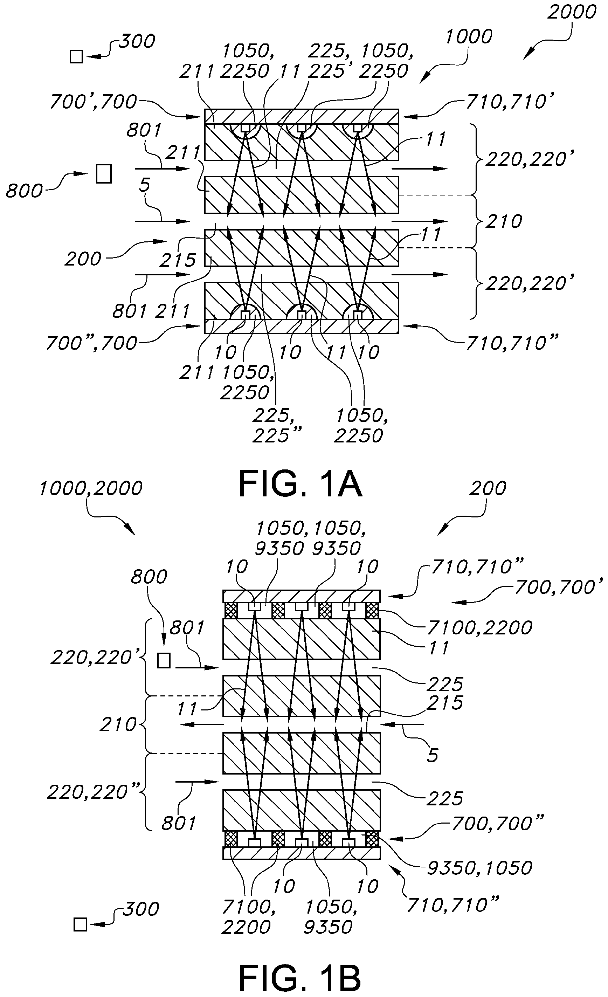

Fig. 1A schematically depicts an embodiment of a photoreactor assembly 1000. In embodiments, the photoreactor assembly 1000 may comprise a photochemical reactor 200 and a light source arrangement 700. In further embodiments, the light source arrangement 700 may comprise a plurality of light sources 10 configured to generate light source radiation 11 selected from one or more of UV radiation, visible radiation, and IR radiation. In further embodiments, the light source arrangement 700 may comprise a support arrangement 710 for the one or more light sources 10. In further embodiments, the photochemical reactor 200 may comprise a first region 210 further comprising a flow reactor system 215 configured to host a fluid 5 to be treated with the light source radiation 11. In yet further embodiments, the photochemical reactor 200 may comprise a second region 220 further comprising a fluid channel system 225, which may not be in fluid contact with the flow reactor system 215, and which is configured for temperature control of one or more of the photochemical reactor 200 and the light sources 10. In specific embodiments, the first region 210 and the second region 220 may be configured in thermal contact with each other or form a monolithic body. In other embodiments, the photochemical reactor 200 may comprise a light transmissive material 211 that is transmissive for the light source radiation 11. In further embodiments, the support arrangement 710 may be configured in thermal contact with the second region 220. In yet further embodiments, one or more of the second region 220 and the support arrangement 710 may provide light source cavities 1050 for hosting at least part of the light sources 10. In specific embodiments, the plurality of light sources 10 may be configured to irradiate at least part of the flow reactor system 215 via the light transmissive material 211. In other embodiments, the light sources 10 may be in thermal contact with the second region 220 via the support arrangement 710.

Indications with ' or " indicate to a first or a second of the same species. Hence, by way of example, there may e.g. be two support arrangements 710, which are herein also indicated as 710' and 710", respectively.

In embodiments, the photoreactor assembly 1000 may further comprise a temperature control system 800. In further embodiments, the temperature control system 800 may be configured to flow a fluid 801 through the fluid channel system 225.

In embodiments, the temperature control system 800 may be configured to control one or more of (i) the temperature of the fluid 801 in the fluid channel system 225, and (ii) the flow velocity of the fluid 801 in the fluid channel system 225. In specific embodiments, one or more of (i) the temperature of the fluid 801, and (ii) the flow velocity of the fluid 801 may be controlled by the temperature control system 800 in dependence of one or more of (a) a temperature of a flow reactor system 215, (b) a junction temperature of the at least one of the light sources 10, and (c) electrical power provided to at least one of the light sources 10.

In embodiments, the temperature control system 800 may be configured to control the temperature of the flow reactor system 215, and the support arrangement 710 below the junction temperature of the at least one of the light sources 10.

In embodiments, the second region 220 may comprise second region cavities 2250. In further embodiments, the light sources 10 may at least partly extend into the second region cavities 2250. In yet further embodiments, the light source cavities 1050 may comprise the second region cavities 2250.

In embodiments, the second region cavities 2250 may extend into the fluid channel system 225. In further embodiments, the second region cavities 2250 may not be in fluid contact with the fluid channel system 225.

In embodiments, the photoreactor assembly 1000 may comprise a stack 2000 of a primary light source arrangement 700, a primary second region 220, the first region 210, a secondary second region 220, and a secondary light source arrangement 700.

In embodiments, the plurality of light sources 10 may comprise one or more of chips-on-board light sources (COB), light emitting diodes (LEDs), laser diodes, and superluminescent diodes. In further embodiments, one or more of a spectral power distribution of the light source radiation 11 and an intensity of the light source radiation 11 may be controllable. In embodiments, the photoreactor assembly 1000 may further comprise a control system 300. In yet further embodiments, the control system 300 may be configured to control the one or more of the spectral power distribution and the intensity of the light source radiation 11 along one or more dimensions of the photochemical reactor 200. In specific embodiments, the one or more dimensions of the photochemical reactor 200 may be selected from the group of height, length, width, and diameter.

In another aspect, the invention may be a method for treating a fluid 5 with light source radiation 11, wherein the method may comprise providing the fluid 5 to be treated with the light source radiation 11 in the photochemical reactor 200 of the photoreactor assembly 1000; and irradiating the fluid 5 with the light source radiation 11.

In embodiments, the method may comprises providing the fluid 5 to be treated with the light source radiation 11 in the photochemical reactor 200 of the photoreactor assembly 1000. In other embodiments, the method may comprise irradiating the fluid 5 with the light source radiation 11. In further embodiments, the method may comprise providing the fluid 5 to be treated with the light source radiation 11 and irradiating the fluid 5 with the light source radiation 11.

In embodiments, the method may comprise flowing the fluid 801 through the fluid channel system 225. In further embodiments, the method may comprise controlling a temperature of the fluid 801 in the fluid channel system 225. In further embodiments, the method may comprise controlling a flow velocity of the fluid 801 in the fluid channel system 225. In yet further embodiments, the method may comprise flowing the fluid 801 through the fluid channel system 225 and controlling one or more of (i) a temperature of the fluid 801 in the fluid channel system 225, and (ii) a flow velocity of the fluid 801 in the fluid channel system 225. In specific embodiments, the temperature of the fluid 801, and (ii) the flow velocity of the fluid 801 may be controlled in dependence of one or more of (a) a temperature of a flow reactor system 215, (b) a junction temperature of the at least one of the light sources 10, and (c) electrical power provided to at least one of the light sources 10.

Fig. 1B schematically depicts an embodiment of a photoreactor assembly 1000. In embodiments, the photoreactor assembly 1000 may comprise a photochemical reactor 200 and a light source arrangement 700. In further embodiments, the light source arrangement 700 may comprise a plurality of light sources 10 configured to generate light source radiation 11 selected from one or more of UV radiation, visible radiation, and IR radiation. In further embodiments, the light source arrangement 700 may comprise a support arrangement 710 for the one or more light sources 10. In further embodiments, the photochemical reactor 200 may comprise a first region 210 further comprising a flow reactor system 215. In yet further embodiments, the photochemical reactor 200 may comprise a second region 220 further comprising a fluid channel system 225, which may not be in fluid contact with the flow reactor system 215. In specific embodiments, the first region 210 and the second region 220 may be configured in thermal contact with each other or form a monolithic body. In further embodiments, the support arrangement 710 may be configured in thermal contact with the second region 220. In yet further embodiments, one or more of the second region 220 and the support arrangement 710 may provide light source cavities 1050 for hosting at least part of the light sources 10. In specific embodiments, the plurality of light sources 10 may be configured to irradiate at least part of the flow reactor system 215 via the light transmissive material 211. In other embodiments, the light sources 10 may be in thermal contact with the second region 220 via the support arrangement 710.

In embodiments, the photoreactor assembly 1000 may further comprise a temperature control system 800. In further embodiments, the temperature control system 800 may be configured to flow a fluid 801 through the fluid channel system 225.

In embodiments, the temperature control system 800 may be configured to control one or more of (i) the temperature of the fluid 801 in the fluid channel system 225, and (ii) the flow velocity of the fluid 801 in the fluid channel system 225, in dependence of one or more of (a) a temperature of a flow reactor system 215, (b) a junction temperature of the at least one of the light sources 10, and (c) electrical power provided to at least one of the light sources 10.

In embodiments, the support arrangement 710 may comprise protrusion elements 7100, 2200. In further embodiments, the second region 220 may comprise protrusion elements 7100, 2200. In yet further embodiments, the support arrangement 710 and/or the second region 220 may comprise protrusion elements 7100, 2200. In specific embodiments, the protrusion elements 7100, 2200 may extend from the support arrangement 710 or second region 220, respectively. In other specific embodiments, the protrusion elements 7100, 2200 may define protrusion element-based cavities 9350. In further embodiments, the light sources 10 may at least partly extend into the protrusion element-based cavities 9350. In specific embodiments, the light source cavities 1050 may comprise the protrusion element-based cavities 9350.

In embodiments, the protrusion elements 7100, 2200 may provide at least part of the thermal contact between the support arrangement 710 and the second region 220.

In further embodiments, the protrusion elements 7100, 2200 may comprise a light transmissive material. Especially in embodiments, the light transmissive material may comprise a borosilicate glass-AlN composite.

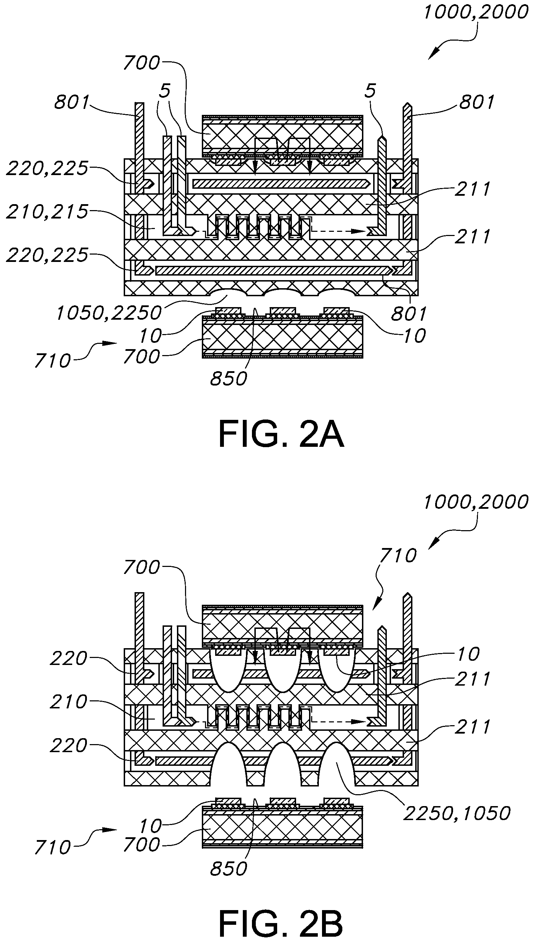

Fig. 2A schematically depicts an embodiment of a photoreactor assembly 1000, further comprising a stack 2000 of a primary light source arrangement 700, a primary second region 220, the first region 210, a secondary second region 220, and a secondary light source arrangement 700. In embodiments, the photochemical reactor 200 may comprise a first region 210 comprising a flow reactor system 215 and a second region 220 comprising a fluid channel system 225, which is not in fluid contact with the flow reactor system 215. The figure illustrates the fluidic paths taken by (i) the reactor fluid in the flow reactor system, and (ii) the coolant in the fluid channel system, indicated by the arrows.

In embodiments, the thermal channels in the flow reactor module are simultaneously used for the thermal management of both the flow reactor cells (in the flow reactor system) as well as the plurality of light sources 11, by mounting the primary second region 220 on either side of the first region in the photochemical reactor.

Fig. 2B schematically depicts an embodiment of a photoreactor assembly 1000, further comprising a stack 2000 of a primary light source arrangement 700, a primary second region 220, the first region 210, a secondary second region 220, and a secondary light source arrangement 700. In embodiments, the second region may have second region cavities 2250 in which light sources may be arranged. Further, the second region cavities 2250 may have a dome-like shape arranged such that loss of light source radiation due to Fresnel reflection may be reduced.

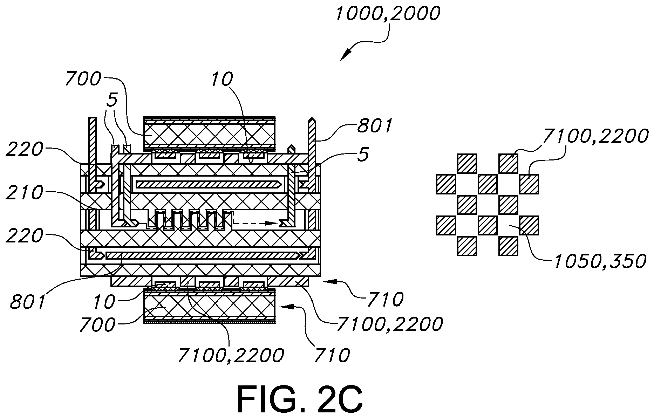

Fig. 2C schematically depicts an embodiment of a photoreactor assembly 1000, further comprising a stack 2000 of a primary light source arrangement 700, a primary second region 220, the first region 210, a secondary second region 220, and a secondary light source arrangement 700. In embodiments, the cavities 1150 may be configured in a 2D array. They may be provided due to the presence of protrusion 7100,2200, forming the cavities 1050,9350 (see also Fig. 1b). In further embodiments, the cavities may be arranged in the support arrangement according to a regular pattern. Especially, the regular pattern may be defined according to a tessellating grid of (regular) polygons, especially a tessellating grid of squares, or especially a tessellating grid of (regular) hexagons, especially wherein a second region cavity is arranged in each grid cell, such as in the center of each grid cell. In embodiments, the second r cavities may be arranged according to the regular pattern in the support arrangement. In further embodiments, cavities may be arranged in the support arrangement according to one or more regular patterns, especially according to two or more (different) regular patterns, or especially according to a single regular pattern.

In this embodiment the photo(chemical) reactor assembly may not need notches in the second region of the reactor. Meaning that the reactor i.e. second region, may only need minor modifications. In this simplified implementation the protrusion elements, (only) an intermediate layer with a matrix of cavities may be required at the light source positions. The cavities (or notches) may be provided by the protrusion elements.

Hence, with the present invention the reactor and the light source may be separate sub-components. In further embodiments, the flow reactor system and the light source modules may have each their own independent thermal management.

In embodiments, the photoreactor assembly may have a double thermal management system: one for the flow reactor system, and one for the light source. With the invention, for a certain type of photochemical reactions, no additional thermal management is needed for the light source, thus, resulting in a more compact, and less complex module design.

In specific embodiments, the flow reactor system and light sources may be spatially integrated. This may provide the advantage of using space more efficiently. Further, this may provide the advantage of higher irradiances because of the close proximity of the light source and the reactor channel in the flow reactor system. This may provide the advantage of using light source radiation more efficiently. Yet further, the spatial configuration of the light sources may provide the advantage restricting irradiation to the reactor channel(s), thus, improving the efficiency of the photoreactor assembly.

In embodiments, the protrusion elements (such as e.g. spherical segment shaped) may allow the intrusion of the light source in the flow reactor system walls. This may provide the advantage of placing the light source(s) in close proximity to the flow reactor system resulting in a higher irradiance at the reactor channel. In embodiments, the implementation of the protrusion elements may be "only" in the second region of the reactor assembly.

In other embodiments, the photoreactor assembly may comprise protrusion elements that do not penetrate the second region. Hence, providing the advantage of a simpler construction of the reactor, only requiring minor modifications. In other alternative embodiments, the one or more of the protrusion elements may be replaced by an intermediate layer with a matrix of cavities at the position of the light source(s).

In other embodiments, the protrusion elements may penetrate deeper into the reactor. In this configuration the thermal channel(s) may flow around the protrusion elements. Further, the curved structure of the thermal channel(s) may increase the heat transfer in the thermal channel(s) because of increased turbulence.

Further, in embodiments, the flow channel system may be simultaneously used for the thermal management of both the reactor channel as well as the light source(s), by mounting the second region, such as especially the flow channel system on one side, or on either side of the first region with the light sources directed towards the reactor channel in the flow reactor system.

In alternative embodiments, the protrusion elements may be used to decrease the light source radiation, so as to limit the heat generated. In other alternative embodiments, the higher irradiance of the light sources at the reactor channel may be used to increase the chemical output of the flow reactor system. In embodiments, the reactor may be operated under different operational conditions, which may be determined by the maximum junction temperature of the LED's and the (minimum) temperature of the flow reactor system. Thermal channel(s) comprised by the fluid channel system may cool the LED module and the flow reactor system, such as especially the reactor channel(s) (i.e. the temperature of the flow reactor system is above a certain threshold T_{reactor}). In embodiments, the maximum value of T_{reactor} may be determined by the maximum value of the LED junction temperature. In embodiments, thermal channels of the fluid channel system may cool both the light source(s) and the reactor channels in the flow reactor system. In embodiments, the temperature of the reactor channels may not exceed the maximum junction temperature of the LED's. When the temperature of the reactor channel(s) must be higher than the maximum junction temperature (for thermal pre-conditioning of the chemical reaction), in embodiments, there may be an additional cooling system for the light source arrangement such as a liquid cooling system of the light source arrangement.

The term "plurality" refers to two or more. Furthermore, the terms "a plurality of" and "a number of" may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features according to the claims and described in the description and/or shown in the attached drawings. The invention further pertains to a method or process comprising one or more of the characterizing features according to the claims and described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method, respectively.

The various aspects discussed in this patent can be combined in order to provide additional advantages. Further, the person skilled in the art will understand that embodiments can be combined, and that also more than two embodiments can be combined.

## Claims

1. A photoreactor assembly (1000) comprising a photochemical reactor (200) and a light source arrangement (700); wherein:
- the light source arrangement (700) comprises (i) a plurality of light sources (10) configured to generate light source radiation (11) selected from one or more of UV radiation, visible radiation, and IR radiation, and (ii) a support arrangement (710) for the plurality of light sources (10);
- the photochemical reactor (200) comprises (i) a first region (210) comprising a flow reactor system (215) configured to host a fluid (5) to be treated with the light source radiation (11), and (ii) a second region (220) comprising a fluid channel system (225), which is not in fluid contact with the flow reactor system (215), and which is configured for temperature control of the photochemical reactor (200) and the plurality of light sources (10); wherein the first region (210) and the second region (220) are configured in thermal contact with each other or form a body; wherein the photochemical reactor (200) comprises a light transmissive material (211) that is transmissive for the light source radiation (11);
- the support arrangement (710) is configured in thermal contact with the second region (220); wherein the second region (220) provides a plurality of light source cavities (1050), each of the plurality of light source cavities (1050) facing the flow reactor system (215) and hosting one or more light sources (10) of the plurality of light sources (10);
- the plurality of light sources (10) is configured to irradiate at least part of the flow reactor system (215) via the light transmissive material (211); and wherein the plurality of light sources (10) are in thermal contact with the second region (220) via the support arrangement (710).

2. The photoreactor assembly (1000) according to claim 1, further comprising a temperature control system (800), wherein the temperature control system (800) is configured to flow a fluid (801) through the fluid channel system (225).

3. The photoreactor assembly (1000) according to claim 2, wherein the temperature control system (800) is configured to control one or more of (i) a temperature of the fluid (801) in the fluid channel system (225), and (ii) a flow velocity of the fluid (801) in the fluid channel system (225), in dependence of one or more of (a) a temperature of a flow reactor system (215), (b) a junction temperature of the at least one of the light sources (10), and (c) electrical power provided to at least one of the light sources (10).

4. The photoreactor assembly (1000) according to claim 3, wherein the temperature control system (800) is configured to control a temperature of the flow reactor system (215) and of the support arrangement (710) below the junction temperature of the at least one of the light sources (10).

5. The photoreactor assembly (1000) according to any one of the preceding claims 1-4, wherein the second region (220) comprise second region cavities (2250), wherein the light sources (10) at least partly extend into the second region cavities (2250), wherein the light source cavities (1050) comprise the second region cavities (2250).

6. The photoreactor assembly (1000) according to claim 5, wherein the second region cavities (2250) extend into the fluid channel system (225), but are not in fluid contact with the fluid channel system (225).

7. The photoreactor assembly (1000) according to any one of the preceding claims 1-4, wherein the support arrangement (710) and/or the second region (220) comprise protrusion elements (7100,2200), extending from the support arrangement (710) or second region (220), respectively, wherein the protrusion elements (7100,2200) define protrusion element-based cavities (9350), wherein the light sources (10) at least partly extend into the protrusion element-based cavities (9350); and wherein the light source cavities (1050) comprise the protrusion element-based cavities (9350).

8. The photoreactor assembly (1000) according to claim 7, wherein the protrusion elements (7100,2200) provide at least part of the thermal contact between the support arrangement (710) and the second region (220).

9. The photoreactor assembly (1000) according to any one of the preceding claims 7-8, wherein the protrusion elements (7100,2200) comprise a light transmissive material, wherein the light transmissive material comprises a borosilicate glass-AlN composite.

10. The photoreactor assembly (1000) according to any one of the preceding claims, further comprising an intermediate layer (850) configured between at least part of the second region (220) and at least part of the support arrangement (710), wherein the intermediate layer (850) comprises a phase change material.

11. The photoreactor assembly (1000) according to any one of the preceding claims, comprising a stack (2000) of a primary light source arrangement (700) a primary second region (220), the first region (210), a secondary second region (220), a secondary light source arrangement (700).

12. The photoreactor assembly (1000) according to any one of the preceding claims, wherein one or more of a spectral power distribution of the light source radiation (11) and an intensity of the light source radiation (11) is controllable, wherein the photoreactor assembly (1000) further comprises a control system (300), wherein the control system (300) is configured to control the one or more of the spectral power distribution and the intensity of the light source radiation (11) along one or more dimensions of the photochemical reactor (200), wherein the one or more dimensions of the photochemical reactor (200) are selected from the group of height, length, width, and diameter.

13. A method for treating a fluid (5) with light source radiation (11), wherein the method comprises:
- providing the fluid (5) to be treated with the light source radiation (11) in the photochemical reactor (200) of the photoreactor assembly (1000) according to any one of the preceding claims; and
- irradiating the fluid (5) with the light source radiation (11).

14. The method according to claim 13, comprising:
- flowing a fluid (801) through the fluid channel system (225); and
- controlling one or more of (i) a temperature of the fluid (801) in the fluid channel system (225), and (ii) a flow velocity of the fluid (801) in the fluid channel system (225), in dependence of one or more of (a) a temperature of a flow reactor system (215), (b) a junction temperature of the at least one of the light sources (10), and (c) electrical power provided to at least one of the light sources (10).

15. The method according to any one of the preceding claims 13-14, wherein the fluid (801) comprises a light transmissive liquid, wherein the light transmissive liquid comprises a silicone oil.

## Patentansprüche

1. Photoreaktoranordnung (1000), umfassend einen photochemischen Reaktor (200) und eine Lichtquellenanordnung (700); wobei:
- die Lichtquellenanordnung (700) (i) eine Vielzahl von Lichtquellen (10), die konfiguriert sind, um Lichtquellenstrahlung (11) zu erzeugen, die aus einem oder mehreren ausgewählt ist von: UV-Strahlung, sichtbarer Strahlung und IR-Strahlung, und (ii) eine Trägeranordnung (710) für die Vielzahl von Lichtquellen (10) umfasst;
- der photochemische Reaktor (200) (i) einen ersten Bereich (210), umfassend ein Strömungsreaktorsystem (215), das zur Aufnahme eines mit der Lichtquellenstrahlung (11) zu behandelnden Fluids (5) konfiguriert ist, und (ii) einen zweiten Bereich (220) mit einem Fluidkanalsystem (225) umfasst, das nicht in Fluidkontakt mit dem Strömungsreaktorsystem (215) steht und zur Temperaturregelung des photochemischen Reaktors (200) und der Vielzahl von Lichtquellen (10) konfiguriert ist; wobei der erste Bereich (210) und der zweite Bereich (220) in thermischem Kontakt miteinander konfiguriert sind oder einen Körper bilden; wobei der photochemische Reaktor (200) ein lichtdurchlässiges Material (211) umfasst, das für die Lichtquellenstrahlung (11) durchlässig ist;
- die Trägeranordnung (710) in thermischem Kontakt mit dem zweiten Bereich (220) konfiguriert ist; wobei der zweite Bereich (220) eine Vielzahl von Lichtquellenhohlräumen (1050) bereitstellt, wobei jeder der Vielzahl von Lichtquellenhohlräumen (1050) dem Strömungsreaktorsystem (215) zugewandt ist und eine oder mehrere Lichtquellen (10) der Vielzahl von Lichtquellen (10) beherbergt;
- die Vielzahl von Lichtquellen (10) konfiguriert ist, um mindestens einen Teil des Strömungsreaktorsystems (215) über das lichtdurchlässige Material (211) zu bestrahlen; und wobei die Vielzahl von Lichtquellen (10) über die Trägeranordnung (710) in thermischem Kontakt mit dem zweiten Bereich (220) steht.

2. Photoreaktoranordnung (1000) nach Anspruch 1, ferner umfassend ein Temperatursteuersystem (800), wobei das Temperatursteuersystem (800) konfiguriert ist, um ein Fluid (801) durch das Fluidkanalsystem (225) fließen zu lassen.

3. Photoreaktoranordnung (1000) nach Anspruch 2, wobei das Temperatursteuersystem (800) konfiguriert ist, um eines oder mehrere zu steuern von: (i) einer Temperatur des Fluids (801) in dem Fluidkanalsystem (225) und (ii) einer Fließgeschwindigkeit des Fluids (801) in dem Fluidkanalsystem (225), in Abhängigkeit von einem oder mehreren von: (a) einer Temperatur eines Strömungsreaktorsystems (215), (b) einer Verbindungstemperatur der mindestens einen der Lichtquellen (10) und (c) elektrischer Leistung, die mindestens einer der Lichtquellen (10) zugeführt wird.

4. Photoreaktoranordnung (1000) nach Anspruch 3, wobei das Temperatursteuersystem (800) konfiguriert ist, um eine Temperatur des Strömungsreaktorsystems (215) und der Trägeranordnung (710) unterhalb der Sperrschichttemperatur der mindestens einen der Lichtquellen (10) zu regeln.

5. Photoreaktoranordnung (1000) nach einem der vorstehenden Ansprüche 1 bis 4, wobei der zweite Bereich (220) Hohlräume (2250) des zweiten Bereichs umfasst, wobei sich die Lichtquellen (10) mindestens teilweise in die Hohlräume (2250) des zweiten Bereichs erstrecken, wobei die Hohlräume (1050) der Lichtquellen die Hohlräume (2250) des zweiten Bereichs umfassen.

6. Photoreaktoranordnung (1000) nach Anspruch 5, wobei sich die Hohlräume (2250) des zweiten Bereichs in das Fluidkanalsystem (225) hinein erstrecken, jedoch nicht in Fluidkontakt mit dem Fluidkanalsystem (225) stehen.

7. Photoreaktoranordnung (1000) nach einem der vorstehenden Ansprüche 1 bis 4, wobei die Trägeranordnung (710) und/oder der zweite Bereich (220) Vorsprungselemente (7100, 2200) umfassen, die sich von der Trägeranordnung (710) bzw. dem zweiten Bereich (220) erstrecken, wobei die Vorsprungselemente (7100, 2200) auf Vorsprungselementen basierende Hohlräume (9350) definieren, wobei sich die Lichtquellen (10) mindestens teilweise in die auf Vorsprungselementen basierenden Hohlräume (9350) erstrecken; und wobei die Lichtquellenhohlräume (1050) die auf Vorsprungselementen basierenden Hohlräume (9350) umfassen.

8. Photoreaktoranordnung (1000) nach Anspruch 7, wobei die Vorsprungselemente (7100, 2200) mindestens einen Teil des thermischen Kontakts zwischen der Trägeranordnung (710) und dem zweiten Bereich (220) bereitstellen.

9. Photoreaktoranordnung (1000) nach einem der vorstehenden Ansprüche 7 bis 8, wobei die Vorsprungselemente (7100, 2200) ein lichtdurchlässiges Material umfassen, wobei das lichtdurchlässige Material einen Borosilikatglas-AIN-Verbundstoff umfasst.

10. Photoreaktoranordnung (1000) nach einem der vorstehenden Ansprüche, ferner umfassend eine Zwischenschicht (850), die zwischen mindestens einem Teil des zweiten Bereichs (220) und mindestens einem Teil der Trägeranordnung (710) angeordnet ist, wobei die Zwischenschicht (850) ein Phasenwechselmaterial umfasst.

11. Photoreaktoranordnung (1000) nach einem der vorstehenden Ansprüche, umfassend einen Stapel (2000) aus einer primären Lichtquellenanordnung (700), einem primären zweiten Bereich (220), dem ersten Bereich (210), einem sekundären zweiten Bereich (220), einer sekundären Lichtquellenanordnung (700).

12. Photoreaktoranordnung (1000) nach einem der vorstehenden Ansprüche, wobei eines oder mehrere von einer spektralen Leistungsverteilung der Lichtquellenstrahlung (11) und einer Intensität der Lichtquellenstrahlung (11) steuerbar sind, wobei die Photoreaktoranordnung (1000) ferner ein Steuersystem (300) umfasst, wobei das Steuersystem (300) konfiguriert ist, um das eine oder die mehreren von der spektralen Leistungsverteilung und der Intensität der Lichtquellenstrahlung (11) entlang einer oder mehrerer Dimensionen des photochemischen Reaktors (200) zu steuern, wobei die eine oder mehreren Dimensionen des photochemischen Reaktors (200) aus der Gruppe aus Höhe, Länge, Breite und Durchmesser ausgewählt sind.

13. Verfahren zum Behandeln eines Fluids (5) mit Lichtquellenstrahlung (11), wobei das Verfahren umfasst:
- Bereitstellen des mit der Lichtquellenstrahlung (11) zu behandelnden Fluids (5) in dem photochemischen Reaktor (200) der Photoreaktoranordnung (1000) nach einem der vorstehenden Ansprüche; und
- Bestrahlen des Fluids (5) mit der Lichtquellenstrahlung (11).

14. Verfahren nach Anspruch 13, umfassend:
- Strömen eines Fluids (801) durch das Fluidkanalsystem (225); und
- Steuern eines oder mehrerer von: (i) einer Temperatur des Fluids (801) in dem Fluidkanalsystem (225) und (ii) einer Fließgeschwindigkeit des Fluids (801) in dem Fluidkanalsystem (225), in Abhängigkeit von einem oder mehreren von: (a) einer Temperatur eines Strömungsreaktorsystems (215), (b) einer Sperrschichttemperatur der mindestens einen der Lichtquellen (10) und (c) der elektrischen Leistung, die mindestens einer der Lichtquellen (10) zugeführt wird.

15. Verfahren nach einem der vorstehenden Ansprüche 13 bis 14, wobei das Fluid (801) eine lichtdurchlässige Flüssigkeit umfasst, wobei die lichtdurchlässige Flüssigkeit ein Silikonöl umfasst.

## Revendications

1. Ensemble photoréacteur (1000) comprenant un réacteur photochimique (200) et un agencement de sources de lumière (700) ; dans lequel :
- l'agencement de sources de lumière (700) comprend (i) une pluralité de sources de lumière (10) configurées pour générer un rayonnement de source de lumière (11) sélectionné parmi un ou plusieurs parmi un rayonnement UV, un rayonnement visible et un rayonnement IR, et (ii) un agencement de support (710) pour la pluralité de sources de lumière (10) ;
- le réacteur photochimique (200) comprend (i) une première région (210) comprenant un système de réacteur d'écoulement (215) configuré pour accueillir un fluide (5) à traiter avec le rayonnement de source de lumière (11), et (ii) une seconde région (220) comprenant un système de canaux de fluide (225), qui n'est pas en contact fluidique avec le système de réacteur d'écoulement (215), et qui est configuré pour une régulation de température du réacteur photochimique (200) et de la pluralité de sources de lumière (10) ; dans lequel la première région (210) et la seconde région (220) sont configurées en contact thermique l'une avec l'autre ou forment un corps ; dans lequel le réacteur photochimique (200) comprend un matériau transmettent la lumière (211) qui transmet le rayonnement de source de lumière (11) ;
- l'agencement de support (710) est configuré en contact thermique avec la seconde région (220) ; dans lequel la seconde région (220) fournit une pluralité de cavités de source de lumière (1050), chacune de la pluralité de cavités de source de lumière (1050) faisant face au système de réacteur d'écoulement (215) et accueillant une ou plusieurs sources de lumière (10) de la pluralité de sources de lumière (10) ;
- la pluralité de sources de lumière (10) est configurée pour exposer au moins une partie du système de réacteur d'écoulement (215) par l'intermédiaire du matériau transmettant la lumière (211) ; et dans lequel la pluralité de sources de lumière (10) est en contact thermique avec la seconde région (220) par l'intermédiaire de l'agencement de support (710).

2. Ensemble photoréacteur (1000) selon la revendication 1, comprenant en outre un système de régulation de température (800), dans lequel le système de régulation de température (800) est configuré pour faire s'écouler un fluide (801) dans le système de canaux de fluide (225).

3. Ensemble photoréacteur (1000) selon la revendication 2, dans lequel le système de régulation de température (800) est configuré pour réguler une ou plusieurs parmi (i) une température du fluide (801) dans le système de canaux de fluide (225), et (ii) une vitesse d'écoulement du fluide (801) dans le système de canaux de fluide (225), en fonction d'une ou plusieurs parmi (a) une température d'un système de réacteur d'écoulement (215), (b) une température de jonction de l'au moins une parmi les sources de lumière (10), et (c) une énergie électrique fournie à au moins l'une parmi les sources de lumière (10).

4. Ensemble photoréacteur (1000) selon la revendication 3, dans lequel le système de régulation de température (800) est configuré pour réguler une température du système de réacteur d'écoulement (215) et de l'agencement de support (710) en dessous de la température de jonction de l'au moins une parmi les sources de lumière (10).

5. Ensemble photoréacteur (1000) selon l'une quelconque des revendications précédentes 1 à 4, dans lequel la seconde région (220) comprend des cavités de seconde région (2250), dans lequel les sources de lumière (10) s'étendent au moins partiellement dans les cavités de seconde région (2250), dans lequel les cavités de source de lumière (1050) comprennent les cavités de seconde région (2250).

6. Ensemble photoréacteur (1000) selon la revendication 5, dans lequel les cavités de seconde région (2250) s'étendent dans le système de canaux de fluide (225), mais ne sont pas en contact fluidique avec le système de canaux de fluide (225).

7. Ensemble photoréacteur (1000) selon l'une quelconque des revendications précédentes 1 à 4, dans lequel l'agencement de support (710) et/ou la seconde région (220) comprennent des éléments en saillie (7100, 2200), s'étendant de l'agencement de support (710) ou de la seconde région (220), respectivement, dans lequel les éléments en saillie (7100, 2200) définissent des cavités basées sur des éléments en saillie (9350), dans lequel les sources de lumière (10) s'étendent au moins partiellement dans les cavités basées sur des éléments en saillie (9350) ; et dans lequel les cavités de source de lumière (1050) comprennent les cavités basées sur des éléments en saillie (9350).

8. Ensemble photoréacteur (1000) selon la revendication 7, dans lequel les éléments en saillie (7100, 2200) fournissent au moins une partie du contact thermique entre l'agencement de support (710) et la seconde région (220).

9. Ensemble photoréacteur (1000) selon l'une quelconque des revendications précédentes 7 à 8, dans lequel les éléments en saillie (7100, 2200) comprennent un matériau transmettant la lumière, dans lequel le matériau transmettant la lumière comprend un composite de verre borosilicaté et d'AIN.

10. Ensemble photoréacteur (1000) selon l'une quelconque des revendications précédentes, comprenant en outre une couche intermédiaire (850) conçue entre au moins une partie de la seconde région (220) et au moins une partie de l'agencement de support (710), dans lequel la couche intermédiaire (850) comprend un matériau à changement de phase.

11. Ensemble photoréacteur (1000) selon l'une quelconque des revendications précédentes, comprenant un empilement (2000) d'un agencement de sources de lumière primaire (700), d'une seconde région primaire (220), de la première région (210), d'une seconde région secondaire (220), d'un agencement de sources de lumière secondaire (700).

12. Ensemble photoréacteur (1000) selon l'une quelconque des revendications précédentes, dans lequel une ou plusieurs parmi une distribution de puissance spectrale du rayonnement de source de lumière (11) et une intensité du rayonnement de source de lumière (11) peuvent être régulées, dans lequel l'ensemble photoréacteur (1000) comprend en outre un système de régulation (300), dans lequel le système de régulation (300) est configuré pour réguler une ou plusieurs parmi la distribution de puissance spectrale et l'intensité du rayonnement de source de lumière (11) le long d'une ou plusieurs dimensions du réacteur photochimique (200), dans lequel la ou les dimensions du réacteur photochimique (200) sont choisies dans le groupe constitué d'une hauteur, d'une longueur, d'une largeur et d'un diamètre.

13. Procédé permettant de traiter un fluide (5) avec un rayonnement de source de lumière (11), dans lequel le procédé comprend :
- la fourniture du fluide (5) à traiter avec le rayonnement de source de lumière (11) dans le réacteur photochimique (200) de l'ensemble photoréacteur (1000) selon l'une quelconque des revendications précédentes ; et
- l'exposition du fluide (5) au rayonnement de source de lumière (11).

14. Procédé selon la revendication 13, comprenant :
- l'écoulement d'un fluide (801) à travers le système de canaux de fluide (225) ; et
- la régulation d'un ou plusieurs éléments parmi (i) une température du fluide (801) dans le système de canaux de fluide (225), et (ii) une vitesse d'écoulement du fluide (801) dans le système de canaux de fluide (225), en fonction d'une ou plusieurs parmi (a) une température d'un système de réacteur d'écoulement (215), (b) une température de jonction de l'au moins une parmi les sources de lumière (10), et (c) de l'énergie électrique fournie à au moins l'une parmi les sources de lumière (10).

15. Procédé selon l'une quelconque des revendications précédentes 13 à 14, dans lequel le fluide (801) comprend un liquide transmettant la lumière, dans lequel le liquide transmettant la lumière comprend une huile de silicone.
